# FASCICULE DE BREVET EUROPEEN

(11) **EP 3 309 410 B1**
(45) Date de publication et mention de la délivrance du brevet: **09.09.2020**
(21) Numéro de dépôt: 17195975.2
(22) Date de dépôt: 11.10.2017
(51) Int. Cl.: F16B 2/24, A45C 3/06, A45C 13/00, A45C 13/10

(54) **SAC A REHAUSSE ET PINCE DE FERMETURE POUR SAC A REHAUSSE**
SACK MIT AUFSATZVERLÄNGERUNG UND VERSCHLUSSKLEMME FÜR SACK MIT AUFSATZVERLÄNGERUNG
BAG WITH RISER AND CLOSING CLIP FOR BAG WITH RISER

(30) Priorité: 11.10.2016 FR 1659832
(43) Date de publication de la demande: 18.04.2018
(73) Titulaire: Goyard St-Honoré, 75001 Paris 050413 (FR)
(72) Inventeur: SIGNOLES, Jean-Michel, 75001 Paris (FR)
(74) Mandataire: Plasseraud IP

(56) Documents cités:
- CN-Y- 2 587 218
- FR-A- 1 180 353
- JP-A- 2000 060 626
- JP-A- 2008 220 900
- US-A- 2 172 302
- US-A- 3 286 751
- US-A1- 2005 060 850

## Description

### Domaine Technique de l'invention

La présente invention concerne le domaine technique des sacs, notamment des sacs à main. Plus particulièrement, la présente invention concerne le domaine technique des systèmes de fermeture de sacs, notamment de sacs à main.

### État de la technique

Un sac, notamment un sac à main, présente de manière générale une poche avec une ouverture supérieure ainsi qu'éventuellement une ouverture permettant de prévenir le déversement du contenu du sac lorsque celui-ci est malencontreusement renversé ou de prémunir ce contenu contre la convoitise de tierce personne malintentionnée. Il existe aujourd'hui une variété de systèmes de fermeture de sacs, notamment de sacs à main tels que :
- les systèmes à lien ;
- les systèmes à bouton (à pression ou aimanté) ;
- les systèmes à glissière ;
- les systèmes à mousqueton ;
- les systèmes à clip (à désenclenchement latéral ou frontal) ;
- les systèmes à verrou ; et
- les systèmes à boules.

Les systèmes à lien, plus rudimentaires que les autres, ont pour inconvénient de nécessiter une plissure du bord de la fermeture supérieure, ce qui ne permet pas d'avoir une ouverture à deux bords plats parallèles l'un à l'autre.

Les systèmes à glissière, couramment appelés fermeture Éclair, comprennent deux parties munies de dents et un curseur central. Les dents d'une des parties sont décalées par rapport aux dents de l'autre partie et le curseur central, présentant deux gorges qui se rejoignent, permet d'engrener ou de séparer les dents. Il arrive cependant que ces dents se déforment ou se cassent rendant le système inutilisable.

Les systèmes à bouton, à mousqueton, à clip, à verrou comprennent généralement deux parties complémentaires qui coopèrent pour réaliser le verrouillage de l'ouverture supérieure du sac. Ainsi, un alignement des deux parties est nécessaire à chaque fois que la fermeture du sac est souhaitée.

Les systèmes à boules présentent également deux parties métalliques (boules), généralement symétrique l'une de l'autre, couplées avec un élément ressort, généralement une pièce articulée avec deux portions symétriques, chacune des portions portant une parties métalliques. Le verrouillage et déverrouillage de ce genre de systèmes à boules et généralement malaisé car nécessitant de plus grande force.

Des sacs avec des systèmes de fermetures sont connus des documents US3286751A, FR1180353A et JP2000060626A.

### Présentation de l'invention

Ainsi, un des objectifs de la présente invention est de proposer un système de fermeture pour sac a rehausse permettant la fermeture du sac.

Cet objectif est atteint grâce à une pince de fermeture et un sac à rehausse, selon la revendication 1, la pince comprenant une base et deux ailes s'étendant à partir de la base de manière sensiblement perpendiculaire et du même côté de la base, les ailes étant espacées l'une de l'autre, chacune des ailes présentant une face externe et une face interne, les faces internes se faisant face, la pince de fermeture comprenant en outre deux cales d'accroche, chacune sur la face interne d'une des ailes au niveau de leurs extrémités libres.

La base, les deux ailes et les cales d'accroche sont une seule et même pièce.

La même pièce comprend une première couche d'un premier matériau souple, une deuxième couche d'un deuxième matériau relativement rigide et déformable et une troisième couche d'un troisième matériau souple, les première, deuxième et troisième couches étant superposées les unes aux autres avec la deuxième couche en sandwich entre la première et la troisième couches.

La hauteur des cales d'accroche est sensiblement égale ou inférieure à l'épaisseur de la rehausse.

D'autres caractéristiques optionnelles et non limitatives de la pince de fermeture sont présentées ci-dessous.

Par ailleurs, les première et troisième couches présentent indépendamment une épaisseur comprise entre 0,7 mm et 1,3 mm. En outre, les premier et troisième matériaux sont préférentiellement le cuir.

La deuxième couche peut présenter une épaisseur comprise entre 0,8 mm et 1 mm. Auquel cas, le deuxième matériau est préférentiellement en métal, par exemple en aluminium pliable.

La même pièce peut présenter un axe de symétrie, de préférence deux axes de symétrie, toujours de préférence une forme ovale, par exemple un ovale à deux axes de symétries tel que par exemple une ellipse ou un oblong.

Les première et troisième couches peuvent être cousues l'une à l'autre, la couture enfermant la deuxième couche.

La pince de fermeture peut en outre comprendre un lien.

La présente invention propose également un système de fermeture comprenant la pince de fermeture décrite ci-dessus et une rehausse, c'est-à-dire une pièce d'un matériau souple renforcé à disposer au niveau de l'ouverture d'un sac, notamment sur le bord extérieur de cette ouverture.

La présente invention propose enfin un sac à rehausse comprenant une ouverture supérieure, une rehausse fixée sur le bord extérieur de l'ouverture supérieure et une pince de fermeture telle que décrite ci-dessus.

La distance entre la base et les cales d'accroche peut être sensiblement égale ou légèrement supérieure à la largeur de la rehausse.

La rehausse est de préférence en un matériau souple tel que le cuir.

### Dessins

D'autres objectifs, caractéristiques et avantages apparaitront à la lecture de la description donnée à titre d'exemple qui suit et exposée en référence aux dessins ci-dessous, donnée à titre illustratif et non limitatif, parmi lesquels :
- la figure 1 est une vue schématique de face d'une pince de fermeture faisant partie de l'invention;
- la figure 2 est une vue schématique de côté de la pince de fermeture de la figure 1 ;
- la figure 3 est une vue schématique éclatée de la pince de fermeture de la figure 1 ;
- la figure 4 est une vue de trois-quarts de la pince de fermeture de la figure 1 avec un lien ; et
- la figure 5 est une vue schématique d'un sac à rehausse dotée de la pince de fermeture de la figure 4.

### Description détaillée

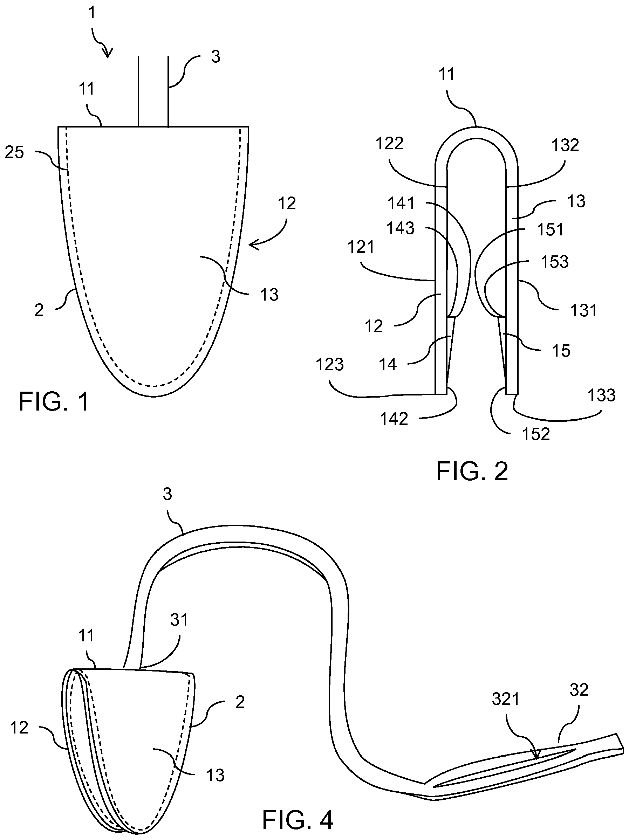

Une pince de fermeture pour sac à rehausse faisant partie de l'invention est décrite ci-après en référence aux figures 1 à 4.

La pince de fermeture **1** comprend une base **11,** deux ailes **12, 13** espacées l'une de l'autre et deux cales d'accroche **14, 15.**

Chacune des ailes **12, 13** s'étend à partir de la base **11** du même côté de celle-ci et de manière sensiblement perpendiculairement à celle-ci ; c'est-à-dire que la base **11** présente un plan moyen et que chacune des ailes **12, 13** forme un angle compris entre 85 et 95° avec le plan moyen, de préférence 90°. Chacune des ailes **12, 13** présente une face externe **121, 131** et une face interne **122, 132,** les faces internes **122, 132** se faisant face.

Chacune des cales d'accroche **14, 15** est prévue sur la face interne **122, 132** d'une des ailes **12, 13** au niveau de son extrémité libre **123, 133,** c'est-à-dire la partie la plus éloignée de la base **11.** Chacune des cales d'accroche **14, 15** peut comprendre un côté proximal **141, 151** et un côté distal **142, 152** par rapport à la base **11.** De manière avantageuse, le côté proximal **141, 151** de la cale d'accroche forme avec la face interne **122, 132** correspondante un épaulement de retenu **143, 153.** Cet épaulement de retenu **143, 153** permet de bloquer la pince de fermeture **1** sur la rehausse du sac. Préférentiellement, cet épaulement de retenu **143, 153** présente une hauteur comprise entre 0,9 mm et 1,1 mm, toujours préférentiellement entre 0,9 mm et 1,1 mm. Le côté distal **142, 152** de la calle d'accroche **14, 15** présente avantageusement une hauteur inférieure à la hauteur de l'épaulement **143, 153,** ainsi, le positionnement de la pince de fermeture **1** sur la rehausse du sac est facilité. Préférentiellement, la hauteur du côté distal **142, 152** de la calle d'accroche **14, 15** est comprise entre 0 mm et 0,8 mm, toujours de préférence 0 mm.

La base **11,** les deux ailes **12, 13** ainsi que les deux calles d'accroche **14, 15** forment de préférence une seule et même pièce **2,** appelée ci-après la pièce unique.

La pièce unique **2** peut présenter diverses formes. Les diverses formes préférées de la pièce unique **2** seront décrites par la suite en considérant que la pièce unique **2** est ramenée à plat, c'est-à-dire que la jonction entre la base **11** et les ailes **12, 13** soit virtuellement ramenée à 180°. La pièce unique **2** présente avantageusement une forme géométrique présentant un voire deux axes de symétrie ; les deux parties symétriques formant représentant chacune une aile **12, 13** de la pince de fermeture **1,** par exemple : un rectangle, un carré, un losange, un ovale. Dans le cas de deux axes de symétries, ceux-ci sont préférentiellement perpendiculaires l'un à l'autre. De préférence, la forme de la pièce unique **2** est un ovale. Le terme « ovale » est compris dans le présent exposé comme incluant les formes oblongues et les ellipses.

La pièce unique **2** comprend une première couche **21** en un premier matériau souple, une deuxième couche **22** en un deuxième matériau relativement rigide et pliable ou déformable et une troisième couche **23** en un troisième matériau souple, les première, deuxième et troisième couches **21, 22, 23** étant superposées les unes aux autres avec la deuxième couche **22** en sandwich entre la première et la troisième couches **21, 23,** et la première couche **21** formant les faces externes **121, 131** de la pince de fermeture **1** et la troisième couche **23** formant les faces internes **122, 132** de la pince de fermeture **1.** Dans l'ensemble du présent exposé, les termes de « relativement rigide » désigne un matériau difficilement déformable à main nue mais pouvant être déformé à l'aide d'outils.

La deuxième couche **22** présente sur sa face orientée vers la troisième couche **23** deux pièces de calage **24, 25** disposées de manière opposée l'une à l'autre. Ces deux pièces de calage **24, 25** une fois recouvertes par la troisième couche **23** forment les cales d'accroche **14, 15.** Ainsi, leurs formes correspondent aux formes des cales d'accroche **14, 15** tel que décrit ci-dessus.

Avantageusement les premier et troisième matériaux sont le cuir. Avantageusement le deuxième matériau est en métal pliable ou déformable, préférablement en aluminium.

Avantageusement, les première et troisième couches **21, 23** présentent indépendamment une épaisseur comprise entre 0,7 mm et 1,3 mm. Avantageusement, la deuxième couche présente une épaisseur comprise entre 0,8 mm et 1 mm.

Les première, deuxième et troisième couches **21, 22, 23** peuvent être assemblées de plusieurs manières connues de l'homme du métier, mais préférentiellement, les première et troisième couches **21, 23** sont cousues ensemble à leurs périphéries **25** de manière à enfermer la deuxième couche **22.** Ainsi, la deuxième couche **22** présente une taille inférieure aux première et troisième couches **21, 23.** La couture sur leurs périphéries **25** est préférentiellement réalisée entre 1 mm et 3 mm, toujours préférentiellement à 2 mm, des bords des première et troisième couches **21, 23.** La tranche des première et troisième couches **21, 23** est avantageusement finie comme il est communément réalisé dans le domaine de la maroquinerie, par exemple à l'aide d'une cire ou d'une gomme. Dans ce cas, la pièce unique **2** est préférentiellement réalisée à plat, puis après couture est déformée pour atteindre sa forme finale, par exemple, par pliage en pliant suivant deux lignes parallèles l'une à l'autre divisant la pièce unique **2** en trois parties : une partie centrale formant la base **11** et deux parties latérales formant les ailes **12, 13** de la pince de fermeture **1.** Autre exemple, la pièce unique **2** initialement plate est cintrée sur son ou un de ses axes de symétrie (dans ce dernier cas, de préférence sur son axe de symétrie correspondant à sa plus grande dimension). Le rayon de ceintrage est préférentiellement compris entre 2 et 10 mm, de préférence entre 3 et 8 mm, de préférence environ 5 mm. Dans tous les cas, la deuxième couche en un matériau relativement rigide est une couche de renfort permettant à la pince de fermeture **2** de conserver sa forme définitive.

La pince de fermeture **1** peut comprendre en outre un lien **3** permettant d'attacher la pince de fermeture **1** à un élément du sac à rehausse afin de le rendre **imperdable,** par exemple à une anse du sac. Ce lien **3** est préférentiellement relié à la base **11,** le cas échéant au milieu de la pièce unique **2.** Le « milieu » est compris ici comme l'isobarycentre de la forme de la pièce unique **2.**

Le lien **3** peut présenter une première extrémité de couplage **31** à la base **11** et une deuxième extrémité de couplage **32** à un élément du sac à rehausse. Ainsi, la première extrémité de couplage **31** est fixée à la base **11.** Afin de fixer la première extrémité de couplage **31** à la base **11,** dans le cas d'une pièce unique **2,** la première couche **21,** préférentiellement également la deuxième couche **22,** présente en son milieu un orifice **211, 221** dont la taille correspond à la circonférence du lien **3.** La première extrémité de couplage **31** est avantageusement insérée à l'intérieur de l'orifice **211, 221** par une première face de la couche correspondante, et peut en outre comprendre deux ailettes **311, 312** plaquées contre une deuxième face de la couche correspondant opposée à la première face. La deuxième extrémité de couplage **32** comprend préférentiellement une fente **321** réalisée le long du lien **3** à travers laquelle peut être inséré un élément du sac à rehausse, par exemple une anse.

Le lien **3** est avantageusement réalisé en un matériau souple, par exemple le cuir. Le lien **3** peut également être une chaine, notamment en métal.

Avantageusement, le lien présente une longueur comprise entre 23 cm et 24 cm.

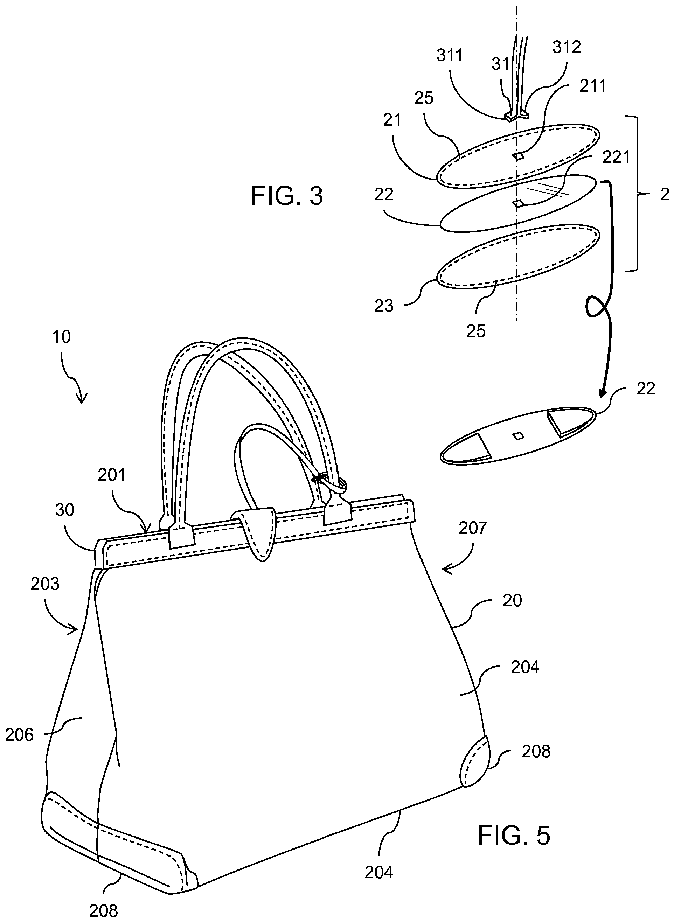

Un sac à rehausse faisant partie de l'invention est décrit ci-après en référence à la figure 5. Dans la suite de la description, le sac à rehausse sera décrit tel qu'il est normalement utilisé. Par exemple, les termes relatifs « supérieur » et « inférieur » feront référence à cette position d'utilisation normale, ainsi que les termes « intérieur » et « extérieur ».

Le sac à rehausse **10** comprend une poche principale **20.** La poche principale **20** comprend une ouverture supérieure **201** et refermable par deux rehausses **30,** chacune disposée sur une face extérieure d'une partie du bord de l'ouverture supérieure **201** de manière à pouvoir être opposées l'une à l'autre. Le sac à rehausse **10** comprend également une pince de fermeture **1** telle que décrite ci-dessus.

De manière avantageuse, l'épaisseur additionnée des rehausses opposées ainsi que des parties du bord de l'ouverture supérieure **201** sur lesquelles les rehausses sont disposées est sensiblement égale à l'espacement entre les ailes **12, 13** de la pince de fermeture **1.** Les parties du bord de l'ouverture supérieure **201** peuvent présenter des biais, notamment en matériau souple tel que le cuir.

Les rehausses **30** sont préférentiellement en un matériau souple, préférentiellement le même que le matériau de la troisième couche **23** de la pièce unique **2,** par exemple le cuir. Chacune des rehausses **30** est préférentiellement composée de deux épaisseurs du matériau souple chacune renforcée par une épaisseur de renfort d'un matériau de renfort. À sa base, la rehausse est disposée préférentiellement à cheval sur la partie du bord de l'ouverture supérieure correspondante.

La hauteur des cales d'accroche **14, 15** est inférieure ou sensiblement égale à l'épaisseur de la rehausse **30.** La distance entre la base **21** et les cales d'accroche **14, 15** (notamment au niveau de l'épaulement **141, 151**) est sensiblement égale ou légèrement supérieure à la largeur de la rehausse **30.**

La poche principale **20** peut en outre comprendre deux faces principales **203, 204** se faisant face. Ces deux faces principales **203, 204** peuvent être cousues l'une à l'autre sur les côtés et/ou le bas, le haut faisant partie de l'ouverture et recevant la rehausse **30.** En outre, la poche principale **20** peut comprendre un ou deux soufflets latéraux **206, 207,** notamment cousus aux côtés des faces principales **203, 204.** En outre ou alternativement, la poche principale **20** peut comprendre une base **205** cousue aux bas des faces principales **203, 204** et le cas échéant aux bas des soufflets latéraux **206, 207.** La poche principale **20** peut aussi comprendre des pièces de renfort **208** positionnées sur les coins inférieurs des faces principales **203, 204,** le cas échéant les coins inférieurs des soufflets **206, 207,** le cas échéant les coins de la base **205.** En d'autres termes, la poche présentant une forme générale, ces pièces de renfort sont avantageusement prévues à chaque sommet en position basse de la forme générale. Le sac à rehausse **10** peut en outre comprendre une ou deux anses **40** voire plus. Chaque des extrémités des anses **40** peut être fixée, indépendamment de l'autre, sur la rehausse **30,** sur une partie d'une face principale **203, 204** non recouverte par la rehausse **30,** sur une partie d'un soufflet **206, 207** substantiellement non déformée par la fermeture du sac, c'est-à-dire de préférence à distance du haut du soufflet **206, 207.** Comme indiqué plus haut, le lien **3** de la pince de fermeture est préférentiellement fixé à une des anses **40,** de préférence de manière à être mobile le long de l'anse **40.** Par exemple, l'anse **40** est passée à travers la fente **321** du lien **3.** Ainsi, la longueur de la fente **321** du lien **3** est suffisamment grande pour permettre le passage de l'anse sans difficulté rendant la pince de fermeture imperdable. Autre exemple, la fente **321** du lien **3** est suffisamment large pour permettre le passage de la base et des ailettes de la pince de fermeture au travers de la fente **321.** La boucle formée alors par le lien **3** enserrant une anse **40.** Ainsi, la pince de fermeture **1** tout en pouvant être rendue imperdable est démontable du sac. Par ailleurs, la fabrication de la pince de fermeture peut alors être découplée de celle du sac à rehausse. La fente **321** n'a pas besoin d'être très grande, en effet, il suffit que la longueur de la fente **321** soit légèrement supérieure à la largeur des ailes et de la base, notamment le petit axe de la forme ovale. En effet, pour faire passer la base et les deux ailes au travers de la fente, il suffira alors de d'abord faire passer une aile, puis la base et enfin l'autre aile.

## Revendications

1. Sac à rehausse comprenant une ouverture supérieure, une rehausse fixée sur le bord extérieur de l'ouverture supérieure et une pince de fermeture pour sac à rehausse, dans lequel la pince de fermeture comprend une base et deux ailes s'étendant à partir de la base de manière sensiblement perpendiculaire et du même côté de la base, les ailes étant espacées l'une de l'autre, chacune des ailes présentant une face externe et une face interne, les faces internes se faisant face, la pince de fermeture comprenant en outre deux cales d'accroche, chacune sur la face interne d'une des ailes au niveau de leurs extrémités libres la base, les deux ailes et les cales d'accroche sont une seule et même pièce
dans lequel, la même pièce comprend une première couche d'un premier matériau souple, une deuxième couche d'un deuxième matériau relativement rigide et déformable et une troisième couche d'un troisième matériau souple, les première, deuxième et troisième couches étant superposées les unes aux autres avec la deuxième couche en sandwich entre la première et la troisième couches, et
dans lequel la hauteur des cales d'accroche est sensiblement égale ou inférieure à l'épaisseur de la rehausse.

2. Sac à rehausse selon la revendication 1, dans lequel les première et troisième couches présentent indépendamment une épaisseur comprise entre 0,7 mm et 1,3 mm.

3. Sac à rehausse selon la revendication 2, dans lequel les premier et troisième matériaux sont le cuir.

4. Sac à rehausse selon l'une des revendications 1 à 3, dans lequel la deuxième couche présente une épaisseur comprise entre 0,8 mm et 1 mm.

5. Sac à rehausse selon la revendication 4, dans lequel le deuxième matériau est en métal, préférablement en aluminium pliable.

6. Sac à rehausse selon l'une des revendications 1 à 5, dans lequel la même pièce présente un axe de symétrie, de préférence deux axes de symétrie, toujours de préférence une forme ovale, par exemple un ovale à deux axes de symétries tel que par exemple une ellipse ou un oblong.

7. Sac à rehausse selon l'une des revendications 1 à 5, dans lequel les première et troisième couches sont cousues l'une à l'autre, la couture enfermant la deuxième couche.

8. Sac à rehausse selon l'une des revendications 1 à 7, dans lequel la pince de fermeture comprend en outre un lien.

9. Sac à rehausse selon l'une des revendications 1 à 8, dans lequel la distance entre la base et les cales d'accroche est sensiblement égale ou légèrement supérieure à la largeur de la rehausse.

10. Sac à rehausse selon l'une des revendications 1 à 9, dans lequel la rehausse est en cuir.

## Patentansprüche

1. Tasche mit Erhöhung, umfassend eine obere Öffnung, eine am äußeren Rand der oberen Öffnung angebrachte Erhöhung und eine Verschlussklammer für eine Tasche mit Erhöhung, wobei die Verschlussklammer eine Basis und zwei Flügel umfasst, die sich von der Basis im Wesentlichen senkrecht und auf derselben Seite der Basis erstrecken, wobei die Flügel voneinander beabstandet sind, wobei jeder der Flügel eine Außenfläche und eine Innenfläche aufweist, wobei die Innenflächen einander zugewandt sind, wobei die Verschlussklammer ferner zwei Haken-Keile umfasst, die jeweils auf der Innenfläche eines der Flügel auf Höhe von deren freien Enden angeordnet sind, wobei die Basis, die beiden Flügel und die Haken-Keile ein einziges Teil sind, wobei das einzige Teil eine erste Schicht aus einem ersten, flexiblen Material, eine zweite Schicht aus einem zweiten, relativ starren und verformbaren Material und eine dritte Schicht aus einem dritten, flexiblen Material umfasst, wobei die erste, zweite und dritte Schicht übereinander angeordnet sind und die zweite Schicht zwischen der ersten und dritten Schicht sandwichartig angeordnet ist, und
wobei die Höhe der Haken-Keile im Wesentlichen gleich oder kleiner als die Dicke der Erhöhung ist.

2. Tasche mit Erhöhung nach Anspruch 1, wobei die erste und die dritte Schicht unabhängig voneinander eine Dicke zwischen 0,7 mm und 1,3 mm aufweisen.

3. Tasche mit Erhöhung nach Anspruch 2, wobei das erste und dritte Material Leder ist.

4. Tasche mit Erhöhung nach einem der Ansprüche 1 bis 3, wobei die zweite Schicht eine Dicke zwischen 0,8 mm und 1 mm aufweist.

5. Tasche mit Erhöhung nach Anspruch 4, wobei das zweite Material Metall ist, vorzugsweise faltbares Aluminium.

6. Tasche mit Erhöhung nach einem der Ansprüche 1 bis 5, wobei das einzige Teil eine Symmetrieachse aufweist, vorzugsweise zwei Symmetrieachsen, weiter bevorzugt eine ovale Form, zum Beispiel ein Oval mit zwei Symmetrieachsen, wie zum Beispiel eine Ellipse, oder eine längliche Form.

7. Tasche mit Erhöhung nach einem der Ansprüche 1 bis 5, wobei die erste und die dritte Schicht zusammengenäht sind, wobei die Naht die zweite Schicht umschließt.

8. Tasche mit Erhöhung nach einem der Ansprüche 1 bis 7, wobei die Verschlussklammer ferner ein Verbindungselement umfasst.

9. Tasche mit Erhöhung nach einem der Ansprüche 1 bis 8, wobei der Abstand zwischen der Basis und den Haken-Keilen im Wesentlichen gleich oder etwas größer als die Breite der Erhöhung ist.

10. Tasche mit Erhöhung nach einem der Ansprüche 1 bis 9, wobei die Erhöhung aus Leder hergestellt ist.

## Claims

1. Bag with reinforcing strips comprising an upper opening, a reinforcing strip fixed on the outer edge of the upper opening and a closing clip for a bag with reinforcing strips, wherein the closing clip comprises a base and two wings extending from the base substantially perpendicular to and on the same side of the base, the wings being separated from each other, each of the wings having an outer face and an inner face, the inner faces facing each other, the closing clip also comprising two locking wedges, each on the inner face of one of the wings at their free ends wherein the base, the two wings and the locking wedges are all made in a single part,
wherein the single part comprises a first layer of a first material which is flexibla, a second layer of a second material which is relatively rigid and deformable, and a third layer made of a third material which is flexible, the first, second and third layers being superposed on each other with the second layer sandwiched between the first and the third layers, and
wherein the height of the locking wedges is substantially lower than or equal to the thickness of the reinforcing strips.

2. Bag with reinforcing strips according to claim 1, wherein the first and third layers independently have a thickness of between 0.7 mm and 1.3 mm.

3. Bag with reinforcing strips according to claim 2, wherein the first and third materials are leather.

4. Bag with reinforcing strips according to one of claims 1 to 3, wherein the second layer has a thickness of between 0.8 mm and 1 mm.

5. Bag with reinforcing strips according to claim 4, wherein the second material is made of metal, preferably foldable aluminium.

6. Bag with reinforcing strips according to one of claims 1 to 5, wherein the single part has an axis of symmetry, and preferably two axes of symmetry, still preferably an oval shape, for example an oval with two axes of symmetry for example such as an ellipse or an oblong.

7. Bag with reinforcing strips according to one of claims 1 to 5, wherein the first and third layers are sewn to each other, the stitches enclosing the second layer.

8. Bag with reinforcing strips according to one of claims 1 to 7, wherein the closing clip also comprises a strap.

9. Bag with reinforcing strips according to one of claims 1 to 8, wherein the distance between the base and the locking wedges is substantially greater than or equal to the width of the reinforcing strip.

10. Bag with reinforcing strips according to one of claims 1 to 9, wherein each reinforcing strip is made of leather.
